# EUROPÄISCHE PATENTSCHRIFT

(11) **EP 1 614 996 B1**
(45) Veröffentlichungstag und Bekanntmachung des Hinweises auf die Patenterteilung: **24.12.2008**
(21) Anmeldenummer: 05104941.9
(22) Anmeldetag: 07.06.2005
(51) Int. Cl.: G01C 21/34

(54) **Verfahren und Routenplanungssystem zur dynamischen Routenplanung**
Method of and system for dynamic route planning
Procédé et système de planification dynamique d'itinéraire

(30) Priorität: 05.07.2004 DE 102004032495
(43) Veröffentlichungstag der Anmeldung: 11.01.2006
(73) Patentinhaber: Continental Automotive GmbH, 30165 Hannover (DE)
(72) Erfinder: Verriet, Jacobus Hedrikus, 5509 NP Veldhoven (NL); Flinsenberg, Ingrid Christina Maria Dr., 5616 NV Eindhoven (NL)

(56) Entgegenhaltungen:
- EP-A- 1 026 649
- US-B1- 6 401 027
- WUNDERLICH K E; KAUFMAN D E; SMITH R L: "Link travel time prediction for decentralized route guidance architectures" IEEE TRANSACTIONS ON INTELLIGENT TRANSPORTATION SYSTEMS, Bd. 1, Nr. 1, März 2000 (2000-03), Seiten 4-14, XP011028365 USA

## Beschreibung

Die Erfindung betrifft ein Verfahren zur dynamischen Routenplanung in einem Routenplanungssystem, bei dem innerhalb eines, in einzelne Kanten und Knoten unterteilten, Straßennetzes eine Route zwischen einem Startpunkt und einem Zielpunkt berechnet wird, wobei die Route in Abhängigkeit von, den Kanten zugeordneten, Kanteneigenschaften bestimmt wird. Des Weiteren betrifft die Erfindung ein Routenplanungssystem zur dynamischen Routenplanung mit einer Recheneinheit, die mit einer Eingabeeinheit, einer Anzeigeeinheit und einem ersten Speicher, der ein in einzelne Kanten und Knoten unterteiltes Straßennetz enthält, verbunden ist, wobei die Recheneinheit zur Berechnung einer Route innerhalb des Straßennetzes zwischen einem Startpunkt und einem Zielpunkt, in Abhängigkeit von, den Kanten zugeordneten, Kanteneigenschaften ausgelegt ist.

Routenplanungssysteme mit statischer Routenplanung sind insbesondere von fest in Kraftfahrzeugen eingebauten Navigationsgeräten her bekannt. Aber auch tragbare Handgeräte, wie PDA's oder die um ein Positionserfassungsmodul erweiterten Mobilfunkgeräte, sind heutzutage in der Lage, eine statische Routenplanung und eine anschließende Navigation eines Benutzers entlang dieser Route durchzuführen. Daneben gibt es noch die reinen Routenplanungssysteme, mit denen ausschließlich eine statische Route geplant, jedoch keine Navigation durchgeführt werden kann.

Unter statischer Routenplanung versteht man dabei die Bestimmung einer Route in einem Straßennetz zwischen einem Start- und einem Zielpunkt, wobei das Straßennetz statisch, d.h. zeitlich unveränderlich, ist. Für die Routenplanung ist das in einem Speicher des Routenplanungssystems abgelegte Straßennetz in Kanten und Knoten unterteilt, wobei den Kanten jeweils eigene Kanteneigenschaften zugeordnet werden, die als Routenplanungskosten verstanden werden. Der Routenplanungsalgorithmus sucht nun nach der Route zwischen dem Start- und dem Zielpunkt, die ein bestimmtes Kostenkriterium optimiert bzw. minimiert. Solche Kostenkriterien können beispielsweise sein die Länge der Gesamtroute, das Befahren möglichst weniger Autobahnen, das schnellstmögliche Erreichen des Zielpunktes etc. Als Kanteneigenschaften werden entsprechend zugeordnet die Länge der Kante, die mittlere Geschwindigkeit für diese Kante oder der Straßentyp der Kante.

Eine bekannte Erweiterung der herkömmlichen Funktionalität stellt die dynamische Routenplanung unter Berücksichtigung von aktuellen Verkehrsinformationen dar. Die per Funk empfangenen Verkehrsinformationen werden hinsichtlich ihrer Relevanz für die vorab statisch geplante Route ausgewertet. Erhöht sich infolge einer Verkehrsbehinderung die für das Zurücklegen der statischen Route benötigte Fahrzeit, so wird eine dynamische Route geplant und dem Benutzer entweder zur Auswahl angeboten oder als neue Route einer folgenden Navigation zugrunde gelegt. Bei der dynamischen Routenplanung werden die den betroffenen Straßennetz-Kanten zugeordneten Kanteneigenschaften entsprechend der Verkehrsinformation verändert, d.h. dass beispielsweise die mittlere Geschwindigkeit herabgesetzt wird. Dadurch erhöhen sich entsprechend die Routenplanungskosten für diese Kante. Allgemein gilt also für das bisherige Verständnis des Begriffs dynamische Routenplanung, dass nach der Berechnung einer ersten, nämlich der statischen, Route im Fall von Änderungen der Kanteneigenschaften eine zweite Route berechnet wird.

Da die Verkehrsinformationen im allgemeinen nur die geographische Länge von Staus oder die Position von Behinderungsstellen angeben, nicht jedoch die zu erwartende Fahrzeitverlängerung, muss die Fahrzeitverlängerung im allgemeinen vom Routenplanungssystem ermittelt werden, wobei dies nur durch eine grobe Schätzung möglich ist, da eine Staulänge noch nichts über eine mittlere Geschwindigkeit in diesem Stau aussagt. Alternativ schlägt die DE-10219500-A1 vor, dem Benutzer die Staulänge anzuzeigen und von ihm die Fahrzeitverlängerung aufgrund seiner Erfahrung abschätzen zu lassen. In für den Benutzer unbekannten Verkehrsgebieten wird dies jedoch nicht so leicht möglich sein. Außerdem erfordert diese Ausführung eine Interaktion zwischen dem Benutzer und dem Routenplanungssystem während der Fahrt, was unter Umständen als störend oder ablenkend empfunden werden kann. Allgemein nachteilig bei der dynamischen Routenplanung auf Basis von per Verkehrsfunk übertragenen Informationen ist des Weiteren, dass die Informationen nur binäre Inhalte haben, also "Stau vorhanden/nicht vorhanden". Daraus resultiert eine sprunghafte Änderung der von der Routenplanung vorhergesagten Fahrzeit.

Aus der EP 1 026 649 A2 sind ein Verfahren und eine Vorrichtung zur Bereitstellung von Verkehrsinformationen für ein Fahrzeug auf einem Verkehrswegenetz bekannt. Ausgehend von einem Startort und Startzeitpunkt werden aktuelle und prognostizierte Verkehrsdaten in einer Verkehrszentrale ermittelt und an das Fahrzeug übertragbar aufbereitet. In der Zentrale wird anhand dort vorhandener Verkehrsdaten abhängig von Startort und Startzeitpunkt mittels eines verkehrsabhängigen Routensuchverfahrens eine die Kostenfunktion optimierte Route zu jeder Streckenkante berechnet. Die vorhandenen Verkehrsdaten umfassen mindestens die aktuellen prognostizierten Funktionswerte einer verkehrsabhängigen Kostenfunktion für die einzelnen Streckenkanten. Die zugehörige Ankunftszeit wird bestimmt sowie der zu der ermittelnden Ankunftszeit gehörige Kostenfunktionswert ausgewählt. Die so ausgewählten Kostenfunktionswerte werden dann gegebenenfalls mit weiteren Verkehrsdaten als übertragungsfähige Verkehrsinformationen aufbereitet.

Aus der US 6,401,027 B1 ist ein Verkehrsplanungssystem bekannt. Eine Vorrichtung in einem Fahrzeug ermittelt zeitbezogen die Position des Fahrzeugs innerhalb einer digitalen Straßenkarte und verwendet dazu Informationen, die von einem Positionsbestimmungssystem bereitgestellt werden. Die zeitbezogenen Fahrzeugpositionen werden an einen Verkehrsservicecenter übermittelt. Der Verkehrsservicecenter sammelt Daten von allen mit derartigen Vorrichtungen ausgestatteten Fahrzeugen die auf einem Straßennetz in einem vorgegebenen Bereich fahren. Das Verkehrsservicecenter verarbeitet die Daten und stellt Echtzeitverkehrsinformationen zur Verfügung. Die Vorrichtung im Fahrzeug erhält die digitale Straßenkarte und die Echtzeitverkehrinformationen und ermittelt eine Route für einen Fahrer, der die Vorrichtung verwendet. Die Verkehrsinformationen basieren auf Vorhersagen von normalen Verkehrssituationen die von archivierten Daten gewonnen werden und durch auf die Echtzeitverkehrssituation angepasste Faktoren angepasst werden.

Aufgabe der vorliegenden Erfindung ist es, ein Verfahren und ein Routenplanungssystem der eingangs genannten Art anzugeben, die die genannten Probleme der dynamischen Routenplanung lösen.

Diese Aufgabe wird mit einem Verfahren nach Anspruch 1 und einem Routenplanungssystem nach Anspruch 17 gelöst.

Bei dem erfindungsgemäßen Verfahren wird mindestens einer Kante des Straßennetzes als Kanteneigenschaft eine voraussichtliche Fahrzeit zugeordnet, wobei die voraussichtliche Fahrzeit von einem vorgegeben Zeitpunkt abhängig ist. Eine solche zeitpunktabhängige Fahrzeit ermöglicht eine zeitpunktabhängige Routenplanung. Eine zeitpunktabhängige Routenplanung ist wiederum nichts anderes als eine dynamische Routenplanung, da hierbei die zeitlich veränderlichen Verkehrsbedingungen innerhalb des Straßennetzes berücksichtigt werden. Insbesondere aus Ballungsgebieten ist ja die Tatsache bekannt, dass beispielsweise im Laufe eines Tages die Verkehrsbelastung bestimmter Streckenabschnitte deutlichen Schwankungen unterworfen ist. Je nachdem zu welchem Zeitpunkt ein Benutzer bestimmte Streckenabschnitte passiert, benötigt er dafür eine kürzere oder längere Fahrzeit. Indem mindestens einer Kante eine vom Zeitpunkt abhängige voraussichtliche Fahrzeit zugeordnet wird, kann die Routenplanung für Routen entlang dieser mindestens einen Kante unterschiedliche benötigte gesamte Fahrzeiten vorhersagen, beispielsweise in Abhängigkeit von der Tages- oder Uhrzeit. Die gesamten Fahrzeiten ergeben sich dabei aus der Summe aus der bzw. den zeitpunktabhängigen Fahrzeiten und der statischen Fahrzeit für die übrigen Kanten der Route, wobei die statische Fahrzeit mit den üblichen Verfahren, also beispielsweise aus der Summe der Kantenlängen und der mittleren Geschwindigkeit, bestimmt wird. Bei dem erfindungsgemäßen Verfahren wird die bisher grobe Abschätzung von Fahrzeitänderungen aufgrund von Verkehrsinformationen durch genaue Daten ersetzt. Eine zusätzliche Interaktion mit dem Benutzer ist nicht mehr erforderlich und die vorhergesagte Fahrzeit ändert sich graduell mit dem vorgegebenen Zeitpunkt und nicht mehr in großen Sprüngen. Ein allmähliches Auf- und Abbauen von Staus wird also direkt berücksichtigt.

Die voraussichtliche Fahrzeit für die mindestens eine Kante wird mit einem Zuverlässigkeitswert versehen. Dieser Zuverlässigkeitswert stellt ebenfalls eine Kanteneigenschaft dar und ermöglicht eine Bewertung der von der Routenplanung errechneten Gesamtfahrzeit. Je höher dieser Wert ist desto mehr kann sich der Benutzer darauf verlassen, dass seine benötigte Fahrzeit für die betroffene Kante die voraussichtliche Fahrzeit nicht überschreiten wird. Je mehr Kanten der Route mit einer zeitpunktabhängigen Fahrzeit und einem solchen Zuverlässigkeitswert versehen sind, desto verlässlicher ist dann auch der Wert der vorhergesagten Gesamtzeit.

Der Zuverlässigkeitswert wird gemäß einer besonderen Ausführung aus einem historischen Zeitprofil der Standardabweichung der tatsächlichen Fahrzeit bzw. der Standardabweichung der mittleren Geschwindigkeit der mindestens einen Kante gewonnen. Um ein solches Zeitprofil zu generieren, werden tatsächliche Fahrzeit oder die mittlere Geschwindigkeit nicht nur über einen bestimmten Zeitraum sondern über mehrere gleiche Zeiträume, beispielsweise mehrere aufeinander folgende Montage, aufgezeichnet. Daraus resultieren mehrere, vergleichbare Zeitprofile der jeweiligen Größe, deren Standardabweichung berechnet werden kann. Eine hohe Standardabweichung bedeutet dabei einen geringen Wert an Zuverlässigkeit, d.h. ein zugeordneter Zuverlässigkeitswert könnte beispielsweise aus der Inversen der Standardabweichung gewonnen werden.

Bei dem erfindungsgemäßen Routenplanungssystem ist die voraussichtliche, von einem vorgegebenen Zeitpunkt abhängige Fahrzeit zu der mindestens einen Kante des Straßennetzes in dem ersten oder einem zweiten Speicher abgelegt. Je nachdem, auf welchem Wege die voraussichtliche Fahrzeit dem Routenplanungssystem zur Verfügung gestellt wird, ob auf einem Festwertspeicher oder per Datenfernübertragung, ist diese Information in dem Festwertspeicher oder einem Arbeitsspeicher des Routenplanungssystems enthalten.

Bevorzugt ist die mindestens eine Kante eine von zyklischen Verkehrsbehinderungen betroffene Kante. Es wird also eine Kante gewählt, die besonders starken Schwankungen in der voraussichtlichen Fahrzeit unterworfen ist, da eine solche Kante die für die gesamte Route benötigte Fahrzeit, im Folgenden Gesamtfahrzeit genannt, am stärksten beeinflusst. Je mehr solcher Kanten mit einer zeitpunktabhängigen, voräussichtlichen Fahrzeit versehen werden, um so genauer wird die Vorhersagt der Gesamtfahrzeit durch die Routenplanung.

Der vorgegebene Zeitpunkt, von dem die voraussichtliche Fahrzeit abhängt, ist bevorzugt die Tageszeit und/oder der Wochentag. Dabei kann es aus Speicherplatzgründen sinnvoll sein, je nachdem, ob die Verkehrsbehinderungen nur über den Tag verteilt, nur über eine Woche verteilt oder an jedem Tag in der Woche stark schwanken, entsprechend nur die Tageszeit, nur den Wochentag oder beide Größen der voraussichtliclien Fahrzeit zuzuordnen. Weiterhin ist für Regionen, in denen starke saisonale Unterschiede zu verzeichnen sind, beispielsweise Tourismusgebieten, auch die Angabe des Monats als Zeitpunkt denkbar.

In einer weiteren bevorzugten Ausführung der Erfindung wird der vorgegebene Zeitpunkt als der Zeitpunkt bestimmt, zu dem der Benutzer des Routenplanungssystems die mindestens eine Kante voraussichtlich erreichen wird. Entweder gibt der Benutzer diesen Zeitpunkt direkt vor oder er wird vom Routenplanungssystem ausgehend vom Abfahrtszeitpunkt und dem Abfahrtsort des Benutzers berechnet. Auf diese Weise kann also eine abfahrtzeitabhängige Routenplanung durchgeführt werden, mit deren Hilfe ein Benutzer beispielsweise im Vorfeld klären kann, zu welcher Tageszeit die voraussichtlich schnellste Fahrt möglich ist. Für Geschäftsreisende bietet dies beispielsweise die Möglichkeit, die Termine eines Tages an die voraussichtliche Verkehrssituation anzupassen, um so wenig Zeit wie möglich im Fahrzeug und so viel wie möglich bei den Kunden zu verbringen.

Befindet sich in einem speziellen Fall der Benutzer bereits mitten auf seiner Route und muss die Route umgeplant werden, so kann das zu einem Navigationssystem gehörende Routenplanungssystem ausgehend von der aktuell gemessenen Zeit und dem aktuellen Standort des Benutzers auf den voraussichtlichen Zeitpunkt des Erreichens der mindestens einen Kante schließen.

In einer Ausgestaltung der Erfindung wird die voraussichtliche Fahrzeit für die mindestens eine Kante aus einem historischen Zeitprofil der mittleren Geschwindigkeit dieser Kante gewonnen und in einer anderen Ausgestaltung aus dem historischen Zeitprofil der tatsächlichen Fahrzeit dieser Kante. Solche Zeitprofile werden durch einfache Messungen dadurch gewonnen, dass die jeweilige Größe über einen bestimmten Zeitraum, beispielsweise den Verlauf eines Tages, einer Woche oder eines Monats, aufgezeichnet wird. Bei einem solchen Zeitprofil ist also eine direkte, beispielsweise tabellarische, Zuordnung zwischen einem festen Zeitpunkt und der gemessenen Größe möglich. Aus der zugeordneten tatsächlichen Fahrzeit bzw. der mittleren Geschwindigkeit und der Kantenlänge kann dann auf einfache Weise die voraussichtliche Fahrzeit zu dem jeweiligen Zeitpunkt ermittelt werden.

Anstelle der zeitpunktabhängigen Fahrzeit oder auch zusätzlich zu dieser Größe kann zu der mindestens einen Kante eine weitere, die Routenplanungskosten für diese Kante repräsentierende, Größe generiert werden. Dies hängt von dem verwendeten Routenplanungsalgorithmus und dem zu optimierenden Kostenkriterium ab. Wird beispielsweise nach einer Route gesucht, deren gesamte mittlere Geschwindigkeit einen höchstmöglichen Wert erreichen soll, so kann die zeitpunktabhängige Fahrzeit unter Hinzuziehung der Kantenlänge in eine zeitpunktabhängige mittlere Geschwindigkeit umgerechnet werden. Ein anderes Beispiel sind auf eine dimensionslose Größe normierte Kosten, in deren Berechnung die zeitpunktabhängige Fahrzeit einbezogen wird.

In einer besonders vorteilhaften Ausgestaltung der Erfindung kann der Benutzer einen gewünschten Grad an Zuverlässigkeit der Gesamtfahrzeit vorgeben, welcher während der Routenplanung berücksichtigt wird. Die durch Messungen oder statistische Untersuchungen gewonnenen, zeitpunktabhängigen voraussichtlichen Fahrzeiten bilden zwar das Verkehrsgeschehen für die mindestens eine Kante im Mittel sehr gut ab, können jedoch in ihren Einzelwerten beliebig weit streuen. Durch die Einbeziehung von Zuverlässigkeitswerten kann dem Benutzer ein Gefühl für die Verlässlichkeit der vorhergesagten Gesamtfahrzeit vermittelt werden. Ist es ihm besonders wichtig, dass die vorhergesagte Gesamtfahrzeit nicht überschritten wird, so wählt er einen hohen gewünschten Grad an Zuverlässigkeit.

Damit die Berücksichtigung des gewünschten Grades an Zuverlässigkeit mit möglichst geringem Aufwand in einen bestehenden Routenplanungsalgorithmus eingebunden werden kann, wird in einer speziellen Ausführung ein erstes, von der Routenplanung zu optimierendes Kostenkriterium an den gewünschten Grad an Zuverlässigkeit angepasst. Bevorzugt wird dabei ein auch bei statischen Routenplanungsalgorithmen verwendetes Kostenkriterium eingesetzt, nämlich die Minimierung der Summe der voraussichtlichen Fahrzeiten aller eine Route bildenden Kanten. Die voraussichtlichen Fahrzeiten sind dabei entweder zeitpunktabhängige oder statische Fahrzeiten.

Die Anpassung dieses ersten Kostenkriteriums an den gewünschten Grad an Zuverlässigkeit erfolgt bevorzugt durch eine Erhöhung der Routenplanungskosten in Abhängigkeit von dem der mindestens einen Kante zugeordneten Zuverlässigkeitswert. Dafür wird die der Kante zugeordnete, zeitpunktabhängige voraussichtliche Fahrzeit um einen Unsicherheitsbetrag erhöht, welcher mit steigendem Zuverlässigkeitswert sinkt. Für den Spezialfall der Verwendung der sich zur Zuverlässigkeit entgegengesetzt verhaltenden Standardabweichung muss der Unsicherheitsbetrag mit steigender Standardabweichung demnach steigen. Als Ergebnis weisen die Kanten mit der geringsten Zuverlässigkeit und damit der breitesten Streuung der voraussichtlichen Fahrzeit die höchsten Routenplanungskosten auf und werden bei einem hohen gewünschten Grad an Zuverlässigkeit der Gesamtfahrzeit wahrscheinlich nicht mehr Bestandteil der Route sein.

In einer weiteren Ausgestaltung der Erfindung wird neben dem ersten ein zweites zu optimierendes Kostenkriterium eingeführt und das erste und das zweite Kostenkriterium wird je nach gewünschtem Grad an Zuverlässigkeit unterschiedlich gewichtet. Die gewichteten Kostenkriterien werden dann zu einem übergeordneten Kostenwert zusammengefasst, so dass bei der Routenplanung nach einer Route gesucht wird, die den übergeordneten Kostenwert optimiert. Anstelle der Erhöhung der voraussichtlichen Fahrzeit um einen Unsicherheitsbetrag, was einer Abänderung eines ersten Kostenkriteriums entspricht, wird in dieser Ausgestaltung das erste, auch bei statischen Routenplanungen verwendete, Kostenkriterium unverändert beibehalten und über das zweite Kostenkriterium wird zusätzlich der gewünschte Grad an Zuverlässigkeit berücksichtigt. Gibt der Benutzer keinen gewünschten Grad vor, so wird das zweite Kostenkriterium einfach mit Null gewichtet und der Routenplanungsalgorithmus läuft auf herkömmliche Art und Weise ab.

Als zweites Kostenkriterium wird in einer besonderen Ausführung die Summe der Zuverlässigkeitswerte aller eine Route bildenden Kanten minimiert. Eine Wichtung des ersten und zweiten Kostenkriteriums erfolgt dabei bevorzugt so, dass mit zunehmendem gewünschten Grad an Zuverlässigkeit das erste Kostenkriterium niedriger und das zweite Kostenkriterium höher gewichtet wird. Bezogen auf die besondere Ausführung bedeutet dies, dass mit höherer gewünschter Zuverlässigkeit die Summe der Zuverlässigkeitswerte aller Kanten stärker in den übergeordneten Kostenwert eingeht und die Summe der Fahrzeiten aller Kanten weniger stark. Auf diese Weise wird ein Kompromiss gefunden zwischen dem Wunsch nach möglichst geringer Gesamtfahrzeit und dem Wunsch nach möglichst hoher Zuverlässigkeit, da die Route mit der höchsten Zuverlässigkeit unter Umständen eine der langsamsten Routen sein kann.

Die Eingabeeinheit des Routenplanungssystems ist so ausgelegt, dass der Benutzer den gewünschten Grad an Zuverlässigkeit der Gesamtfahrzeit vorgeben oder auswählen kann. Eine direkte Vor- bzw. Eingabe könnte per Tastatur oder Spracherkennung erfolgen und eine Auswahl per Scroll- oder Cursorfunktion in Verbindung mit einer Enterfunktion.

Bei einer besonderen Ausgestaltung des erfindungsgemäßen Routenplanungssystems ist ein Modul zur Bestimmung der aktuellen Zeit mit der Recheneinheit verbunden. Mit dieser Ausgestaltung kann das Routenplanungssystem entweder die Abfahrtzeit des Benutzers oder im Fall, dass der Benutzer sich bereits auf der Route befindet, die aktuelle Zeit in Verbindung mit einem aktuellen Standort bestimmen. In beiden Fällen ist dann die Recheneinheit des Routenplanungssystems in der Lage den Zeitpunkt zu bestimmen, zu dem der Benutzer voraussichtlich die mindestens eine Kante erreichen wird.

Weiterhin ist in einer Ausführung des Routenplanungssystems vorgesehen, dass ein Modul zum Empfang von Verkehrsinformationen vorhanden ist. Die Verkehrsinformationen werden jedoch nicht in jedem Fall, sondern erst ab dem Überschreiten eines vorgegebenen Schweregrades der Verkehrsbehinderung in die Routenplanung mit einbezogen. Die Schwelle des Schweregrades kann beispielsweise definiert sein als eine minimale Fahrzeitverlängerung. Da ja gemäß der Erfindung zyklisch immer wieder kehrende Verkehrsbehinderungen und die damit verbundene Fahrzeitverlängerung bereits berücksichtigt sind, werden nur noch außergewöhnliche Ereignisse, wie Vollsperrungen, Baustellen oder besonders lange Staus, an die Routenplanung weitergegeben. Diese außergewöhnlichen Ereignisse werden dann in der bekannten Weise als Verkehrsinformation bei der dynamischen Routenplanung berücksichtigt.

Weitere Ausgestaltungen der Erfindung gehen aus den Unteransprüchen hervor.

Die Erfindung wird nachfolgend anhand eines Ausführungsbeispiels und der Zeichnung näher erläutert. Es zeigen:
- Fig. 1: ein Routenplanungssystem zur zeitpunktabhängigen Routenplanung;
- Fig. 2: ein historisches Zeitprofil der mittleren Geschwindigkeit über einer Woche;
- Fig. 3: zwei historische Zeitprofile der tatsächlichen Fahrzeit über einem Tag, für denselben Streckenabschnitt;
- Fig. 4: historisches Zeitprofil der tatsächlichen Fahrzeit und der dazugehörigen Standardabweichung über einem Tag;
- Fig. 5: Ergebnis der Routensuche für unterschiedliche vorgegebene Zuverlässigkeitswerte der Gesamtfahrzeit;
- Fig. 6: Ablaufdiagramm einer Routenplanung mit abfahrtzeitabhängiger Routensuche;
- Fig. 7: Ablaufdiagramm der abfahrtzeitabhängigen Routensuche.

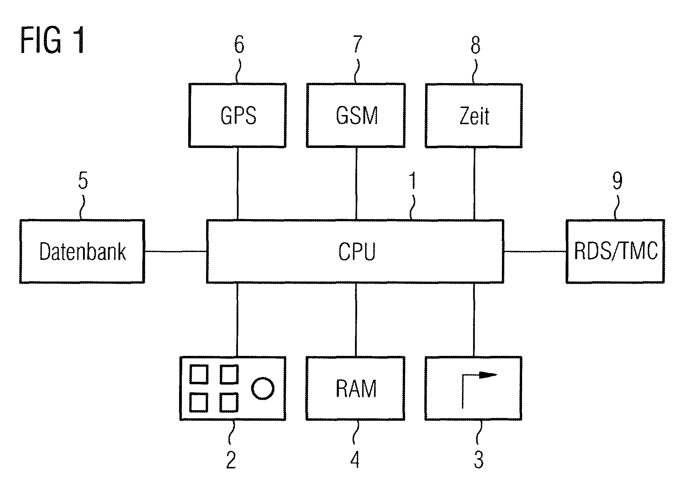

In Figur 1 sind die Bestandteile eines in ein Kraftfahrzeug eingebauten Routenplanungssystems dargestellt, wobei das Routenplanungssystem für eine zeitpunktabhängige Routenplanung ausgelegt ist. Dieses Routenplanungssystem ist in ein nicht dargestelltes Navigationssystem integriert zur anschließenden Navigation des Fahrzeugführers entlang der berechneten Route. Zentrales Element des Routenplanungssystems ist die Recheneinheit 1, mit der alle übrigen Komponenten verbunden sind, nämlich eine Eingabeeinheit 2, eine Anzeigeeinheit 3, eine in einem ersten, nichtflüchtigen Speicher 5 abgelegte Datenbank, ein zweiter flüchtiger Speicher 4, Mittel zur Positionsbestimmung 6, ein Modul zum Aufbau einer drahtlosen Kommunikationsverbindung 7, ein Modul zur Bestimmung der aktuellen Zeit 8 und ein Modul zum Empfang von Verkehrsinformationen 9. Bei dem Routenplanungssystem sind die Module zum Aufbau einer drahtlosen Kommunikationsverbindung 7, zur Bestimmung der aktuellen Zeit 8 und zum Empfang von Verkehrsinformationen 9 optional, da die darüber ermittelten Informationen auch auf anderem Wege, beispielsweise per Benutzereingabe, erlangt werden könnten. Das übergeordnete Navigationssystem verfügt neben den zum Routenplanungssystem gehörenden Elementen noch über weitere Mittel zur genaueren Bestimmung der aktuellen Position, wie beispielsweise einen Gierratensensor und Schnittstellen zu Raddrehzahlsensoren. Sofern eine gegenüber der reinen GPS-Positionsmessung mittels Modul 6 genauere Positionsbestimmung nicht möglich ist, genügt für die Zwecke der dynamischen Routenplanung auch die reine GPS-Information, da für die Planung einer neuen, dynamischen Route in Abhängigkeit vom aktuellen Standort des Benutzers eine ungefähre Kenntnis dieses Standortes ausreicht.

Der erste Speicher 5 des Routenplanungssystems enthält ein in Knoten Lᵢ und in Kanten Mⱼ unterteiltes Straßennetz, wobei allen Mⱼ jeweils eine voraussichtliche Fahrzeit Fⱼ zugeordnet ist. Aus Speicherplatzgründen ist nur einigen Kanten Mⱼ die Fahrzeit Fⱼ in Form eines historischen Zeitprofils der mittleren Geschwindigkeit oder der tatsächlichen Fahrzeit F_{jT} dieser Kanten zugeordnet, wobei diese Kanten Mⱼ entweder zur Gruppe an Straßen mit der höchsten Kategorie, also Autobahnen und Schnellstraßen, oder zur Gruppe der Haupt- und Durchfahrtsstraßen in Ballungsgebieten gehören. Sobald zukünftige Speicher mit deutlich größerer Kapazität zu deutlich geringerem Preis erhältlich sein werden, ist auch die Abspeicherung der historischen Zeitprofile für alle Kanten Mⱼ denkbar. Auf Basis der im ersten Speicher 5 abgelegten Daten kann die Recheneinheit 1 eine dynamische, zeitpunktabhängige Routenplanung durchführen.

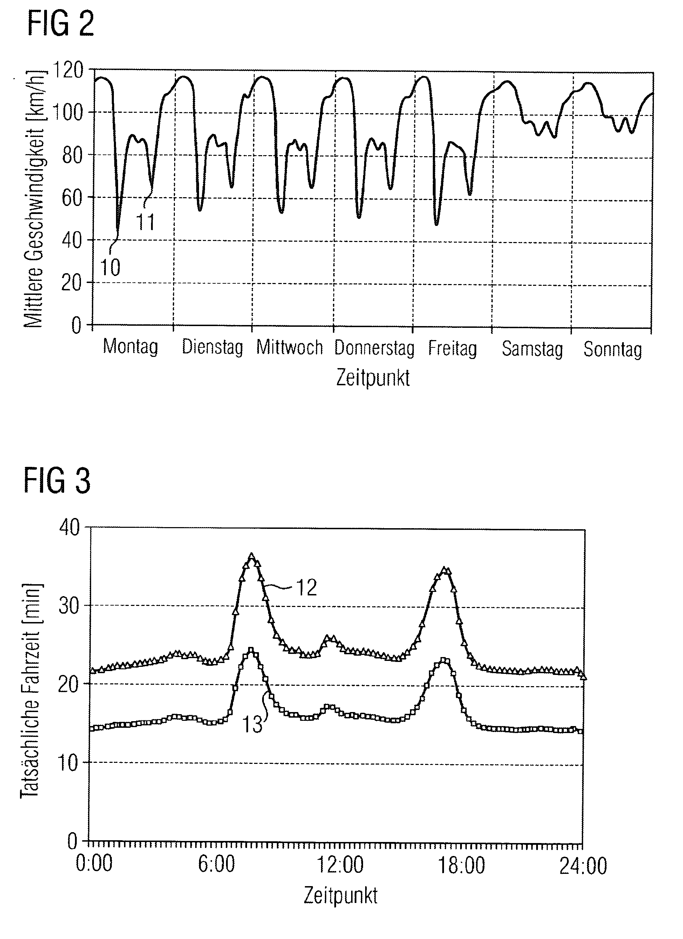

Figur 2 zeigt ein historisches Zeitprofil der mittleren Geschwindigkeit, welches im Verlauf einer Woche auf einem Streckenabschnitt einer Schnellstraße nahe Antwerpen durch Messungen ermittelt wurde. Man sieht die deutlichen Unterschiede im Verlauf eines Tages und im Vergleich zwischen den Arbeitstagen und den Tagen am Wochenende. Die mittlere Geschwindigkeit weist wochentäglich zwei deutliche Geschwindigkeitseinbrüche auf, so beispielsweise am Montag die Geschwindigkeitseinbrüche 10 und 11, die zu Zeiten des Berufsverkehrs am Vormittag (10) und am Nachmittag (11) auftreten. Sofern das Zeitprofil aus Figur 2 im Speicher 5 abgelegt ist, würde die Recheneinheit 1 die für einen vorgegebenen Zeitpunkt, beispielsweise Montag, 10:24 Uhr, aus dem Speicher 5 ausgelesene mittlere Geschwindigkeit von rund 80 km/h in eine voraussichtliche Fahrzeit umrechnen, indem sie die Länge der zu dem Streckenabschnitt nahe Antwerpen gehörenden Kante Mⱼ durch den Geschwindigkeitswert dividiert.

Dieser Umwandlungsschritt wird in dem Routenplanungssystem nach Figur 1 jedoch noch eingespart, da anstelle der mittleren Geschwindigkeit die tatsächliche Fahrzeit F_{jT} als historisches Zeitprofil gespeichert wird. Zwei Profile 12 und 13 einer gemessenen Fahrzeit sind in Figur 3 abgebildet, wobei beide Profile für dieselbe Kante Mⱼ, nur an unterschiedlichen, aber miteinander vergleichbaren Tagen, wie beispielsweise an zwei aufeinander folgenden Dienstagen, aufgenommen wurden. Zu sehen ist der Wert der gemessenen, Fahrzeit in Minuten über dem Verlauf eines Tages zwischen 0:00 Uhr und 24:00 Uhr. Die Fahrzeit weist zwar an den beiden Tagen qualitativ ein vergleichbares Profil auf mit den zu erwartenden Fahrzeitverlängerungen zu den Zeiten des Berufsverkehrs, jedoch weicht sie im Mittel voneinander ab. Das Profil 12 zeigt eine um rund 10 Minuten längere Fahrzeit.

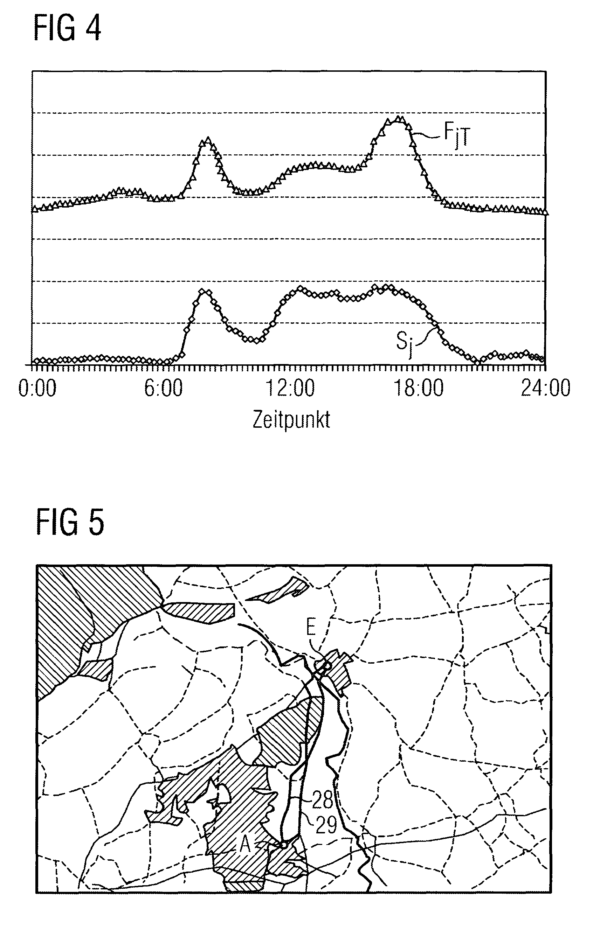

Aus mehreren solcher für denselben Wochentag aufgenommenen Fahrzeit-Profile wird vorab ein Mittelwert gebildet, woraus die so genannte tatsächlichen Fahrzeit F_{jT} resultiert. Des Weiteren werden für die mehreren gemessenen Fahrzeit-Profile eine zugehörige Standardabweichung Sⱼ berechnet. Entsprechende Verläufe sind in Figur 4 zu sehen. Diese historischen Zeitprofile sind letztendlich die in diesem Ausführungsbeispiel in Form einer Tabelle im ersten Speicher 5 des Routenplanungssystems abgelegten Profile.

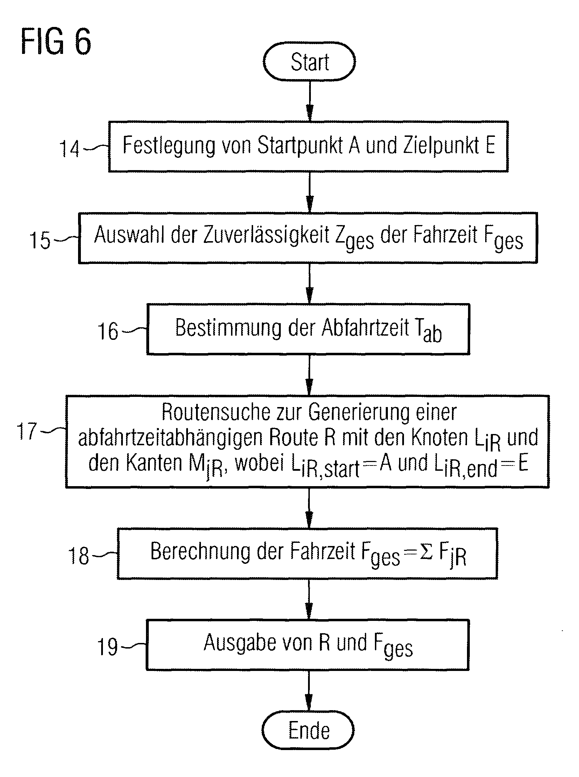

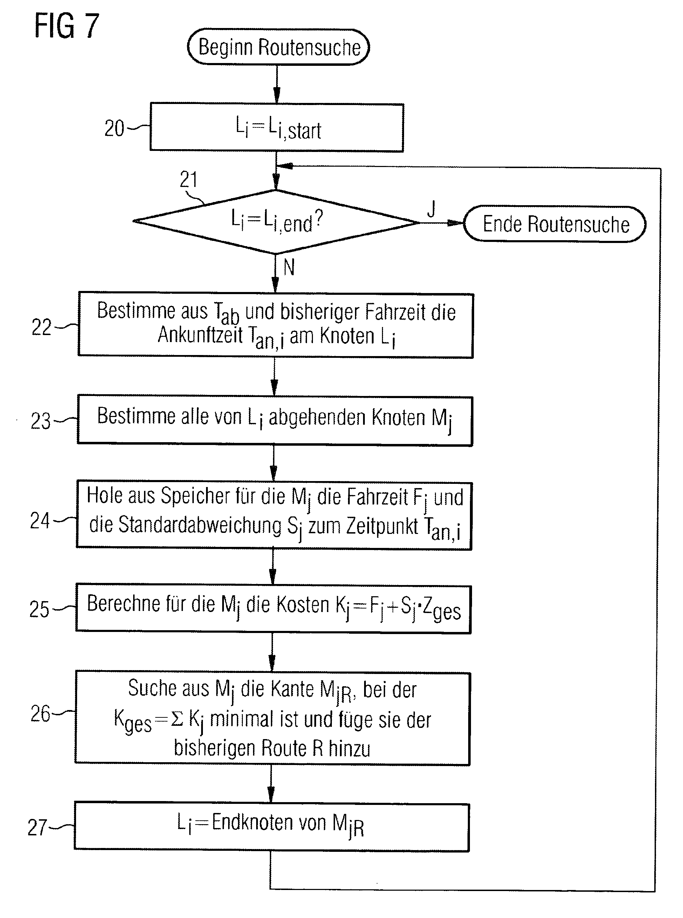

Das auf deren Basis durchgeführte Routenplanungsverfahren wird durch die Ablaufpläne der Figuren 6 und 7 verdeutlicht.

Nach dem Start der Routenplanung werden in Schritt 14 der Startpunkt A und der Zielpunkt E der Route festgelegt. Den Startpunkt A kann das Routenplanungssystem durch eine GPS-Messung mittels der Mittel 6 zur Positionsbestimmung feststellen. Er kann aber auch abweichend davon vom Benutzer mittels der Eingabeeinheit 2 vorgegeben werden. Den Zielpunkt E gibt der Benutzer vor. Des Weiteren wählt der Benutzer in Schritt 15 aus beispielsweise drei möglichen Stufen - hoch, mittel, niedrig - den gewünschten Grad an Zuverlässigkeit Z_{ges} der Gesamtfahrzeit F_{ges}.

Im Schritt 16 bestimmt das Modul 8 die aktuelle Uhrzeit und den aktuellen Wochentag als Abfahrtzeit T_{ab}. Ebenso ist es denkbar, dass der Benutzer eine davon abweichende Abfahrtzeit T_{ab} vorgibt, beispielsweise für eine Reise in der Zukunft. Der zentrale Verfahrensschritt der Routenplanung, nämlich die in Schritt 17 von der Recheneinheit 1 durchgeführte Routensuche zur Generierung einer abfahrtzeitabhängigen Route R, wird anhand von Figur 7 genauer erläutert.

Die im Schritt 18 aus der Summe der Fahrzeiten F_{jR} der in der Route R enthaltenen Kanten M_{jR} berechnete Gesamtfahrzeit F_{ges} sowie die Route R selbst werden in Schritt 19 auf der Anzeigeeinheit 3 ausgegeben.

Die Routensuche nach Figur 7 hat zum Ergebnis eine abfahrtzeitabhängige Route R mit den Knoten L_{iR} und den Kanten M_{jR}, wobei der Startknoten L_{iR,start} dem Startpunkt A entspricht und der Endknoten L_{iR,end} dem Zielpunkt E (vgl. Figur 6).

Die Routensuche läuft als eine Schleife ab, wobei beim Startknoten L_{iR,start} begonnen wird (Schritt 20). Die Schleife läuft solange, bis der als nächstes zu untersuchende Knoten Lᵢ dem Zielpunkt E entspricht (Schritt 21) und damit das Ende der Route R erreicht ist. Aus der Abfahrtzeit T_{ab} und der zwischen dem Startknoten L_{iR,start} und dem zu untersuchenden Knoten Lᵢ zurückgelegten, bisherigen Fahrzeit wird in Schritt 22 durch Summenbildung die Ankunftzeit T_{an,i} am Knoten Lᵢ errechnet. Die von dem zu untersuchenden Knoten Lᵢ abgehenden Kanten Mⱼ werden in Schritt 23 bestimmt und darauf untersucht, welche dieser Kanten Mⱼ mit ihrem Kostenkriterium Kⱼ am wenigsten zu dem Kostenkriterium K_{ges} der Route R beiträgt. Dafür werden in Schritt 24 aus den im ersten Speicher 5 abgelegten historischen Zeitprofilen die zu dem Zeitpunkt T_{an,i} gehörenden Werte der tatsächlichen Fahrzeit F_{jT} und der Standardabweichung Sⱼ geholt, wobei die tatsächliche Fahrzeit F_{jT} als voraussichtliche Fahrzeit Fⱼ betrachtet wird. Alternativ können die zu dem Zeitpunkt T_{an,i} gehörenden Fⱼ und Sⱼ oder auch die zu einem, den Zeitpunkt T_{an,i} beinhaltenden, Zeitraum gehörenden Ausschnitte der historischen Zeitprofile von einem externen Server per drahtloser Datenfernübertragung über das GSM-Modul 7 empfangen und direkt im Arbeitsspeicher, also dem zweiten Speicher 4, des Routenplanungssystems abgelegt werden. In diesem Fall kann Speicherplatz im ersten Speicher 5 gespart werden, da die historischen Zeitprofile sämtlich in einem externen Speicher abgelegt sind. Der externe Server kann sich beispielsweise in einer Verkehrsleitzentrale befinden, von der jeweils die von FCD-Fahrzeugen (Floating-Car-Data) oder von stationär an den Fahrstrecken angebrachten Sensoren gemessene Zeitprofile ausgewertet, in dem externen Speicher als historische Zeitprofile ablegt und auf Anforderung an das Routenplanungssystem übertragen werden.

Für die vom Knoten Lᵢ abgehenden Kanten Mⱼ werden anschließend in Schritt 25 die Kosten Kⱼ berechnet, indem die voraussichtliche Fahrzeit Fⱼ jeder Kante Mⱼ um das Produkt aus Standardabweichung Sⱼ und gewünschtem Grad an Zuverlässigkeit Z_{ges} erhöht wird. Die Kanten Mⱼ mit der breiteren Streuung an gemessenen Fahrzeiten erhalten also höhere Kosten Kⱼ und gehen deshalb mit geringerer Wahrscheinlichkeit in die Route R ein. Die Wichtung der Standardabweichung Sⱼ mit der gewünschten Zuverlässigkeit Z_{ges} erhöht den Einfluss einer breiteren Streuung noch mehr, so dass die Kanten Mⱼ mit der geringsten Zuverlässigkeit am wenigsten in der Route R vertreten sein werden, wodurch die Sicherheit steigt, dass die vom Benutzer für die Route R benötigte Fahrzeit nicht über dem Wert der durch die Routenplanung vorhergesagten Gesamtzeit F_{ges} liegt.

Aus den vom Knoten Lᵢ abgehenden Kanten Mⱼ wird in Schritt 26 die Kante M_{jR} gesucht, für die die Summe der Kosten Kⱼ minimal ist, wobei die Summe über alle bisher der Route R zugeordneten Kanten sowie über jeweils eine der von Lᵢ abgehenden Kanten Mⱼ läuft. An dieser Stelle genügt es auch, die Kante M_{jR} mit dem geringsten eigenen Kostenanteil K_{jR} zu finden, da nur für diese Kante auch die Summe über alle bisherigen Kanten minimal wird. Die gefundene Kante M_{jR} wird der bisher gefundenen Route R hinzugefügt.

Da die ausgewählte Kante M_{jR} vom Knoten Lᵢ abgeht, stellt dieser Knoten den Anfangsknoten von M_{jR} dar. Der am anderen Ende der Kante M_{jR} befindliche Knoten bildet somit den Endknoten, wobei ausgehend von diesem Endknoten die Routensuche fortgesetzt wird (Schritt 27).

Die Figur 5 zeigt das Ergebnis für zwei Routenplanungen zwischen einem Startpunkt A und einem Zielpunkt E mit unterschiedlichem gewünschten Grad an Zuverlässigkeit Z_{ges}. Die Route 29 wurde für einen niedrigen Grad an Zuverlässigkeit Z_{ges} gefunden und die Route 28 für einen höheren Grad. Die Route 28 führt infolge dessen eher über Straßen geringerer Kategorie, als Land- und Nebenstraßen, während die Route 29 über Autobahnen führt. Dies ist darauf zurück zu führen, dass in diesem Bereich des Streckennetzes die Autobahnen größere Standardabweichungen und damit eine breitere Streuung der voraussichtlichen Fahrzeiten aufweisen als die nebengeordneten Straßen.

## Patentansprüche

1. Verfahren zur dynamischen Routenplanung in einem Routenplanungssystem, bei dem
- innerhalb eines, in einzelne Kanten (Mⱼ) und Knoten (Lᵢ) unterteilten, Straßennetzes eine Route (R) zwischen einem Startpunkt (A) und einem Zielpunkt (E) berechnet wird, wobei die Route (R) in Abhängigkeit von, den Kanten (Mⱼ) zugeordneten, Kanteneigenschaften bestimmt wird,
- mindestens einer Kante (Mⱼ) des Straßennetzes als Kanteneigenschaft eine voraussichtliche Fahrzeit (Fⱼ) zugeordnet wird, wobei die voraussichtliche Fahrzeit (Fⱼ) von einem vorgegebenen Zeitpunkt abhängig ist,
**dadurch gekennzeichnet, dass** die voraussichtliche Fahrzeit (Fⱼ) für die mindestens eine Kante (Mⱼ) mit einem Zuverlässigkeitswert versehen wird.

2. Verfahren nach Anspruch 1, **dadurch gekennzeichnet, dass** der Zuverlässigkeitswert für die mindestens eine Kante (Mⱼ) aus einem historischen Zeitprofil der Standardabweichung (Sⱼ) der tatsächlichen Fahrzeit (F_{jT}) bzw. der mittleren Geschwindigkeit dieser Kante (Mⱼ) gewonnen wird.

3. Verfahren nach einem der vorhergehenden Ansprüche, **dadurch gekennzeichnet, dass** die mindestens eine Kante (Mⱼ) eine von zyklischen Verkehrsbehinderungen betroffene Kante ist.

4. Verfahren nach einem der vorhergehenden Ansprüche, **dadurch gekennzeichnet, dass** der vorgegebene Zeitpunkt die Tageszeit und/oder der Wochentag ist.

5. Verfahren nach einem der vorhergehenden Ansprüche, **dadurch gekennzeichnet, dass** der vorgegebene Zeitpunkt als der Zeitpunkt (T_{an,i}) bestimmt wird, zu dem ein Benutzer des Routenplanungssystems die mindestens eine Kante (Mⱼ) voraussichtlich erreichen wird.

6. Verfahren nach Anspruch 5, **dadurch gekennzeichnet, dass** der vorgegebene Zeitpunkt ausgehend von der aktuellen Zeit und dem aktuellen Standort des Benutzers des Routenplanungssystems bestimmt wird.

7. Verfahren nach einem der vorhergehenden Ansprüche, **dadurch gekennzeichnet, dass** die voraussichtliche Fahrzeit (Fⱼ) für die mindestens eine Kante aus einem historischen Zeitprofil der mittleren Geschwindigkeit dieser Kante gewonnen wird.

8. Verfahren nach einem der vorhergehenden Ansprüche, **dadurch gekennzeichnet, dass** die voraussichtliche Fahrzeit (Fⱼ) für die mindestens eine Kante aus einem historischen Zeitprofil der tatsächlichen Fahrzeit (F_{jT}) dieser Kante gewonnen wird.

9. Verfahren nach einem der vorhergehenden Ansprüche, **dadurch gekennzeichnet, dass** die voraussichtliche Fahrzeit (Fⱼ) für die mindestens eine Kante (Mⱼ) in eine, die Routenplanungskosten (Kⱼ) für diese Kante (Mⱼ) repräsentierende, Größe umgerechnet wird.

10. Verfahren nach einem der vorhergehenden Ansprüche, **dadurch gekennzeichnet, dass** ein vom Benutzer vorgegebener, gewünschter Grad an Zuverlässigkeit (Z_{ges}) der Fahrzeit (F_{ges}) der gesamten Route (R) bei der Routenplanung berücksichtigt wird.

11. Verfahren nach Anspruch 10, **dadurch gekennzeichnet, dass** ein erstes durch die Routenplanung zu optimierendes Kostenkriterium an den gewünschten Grad an Zuverlässigkeit (Z_{ges}) angepasst wird.

12. Verfahren nach Anspruch 11, **dadurch gekennzeichnet, dass** das erste Kostenkriterium die Minimierung der Summe der voraussichtlichen Fahrzeiten (F_{jR}) aller eine Route (R) bildenden Kanten (M_{jR}) ist.

13. Verfahren nach Anspruch 12, **dadurch gekennzeichnet, dass** sich die Routenplanungskosten (Kⱼ) für die mindestens eine Kante (Mⱼ) ergeben aus der Erhöhung der voraussichtlichen Fahrzeit (Fⱼ) um einen Unsicherheitsbetrag, welcher mit steigendem Zuverlässigkeitswert sinkt.

14. Verfahren nach Anspruch 11, **dadurch gekennzeichnet, dass** durch die Routenplanung ein zweites Kostenkriterium zu optimieren ist und dass das erste und das zweite Kostenkriterium je nach gewünschtem Grad an Zuverlässigkeit (Z_{ges}) unterschiedlich gewichtet und in einem übergeordneten Kostenwert zusammengefasst werden.

15. Verfahren nach Anspruch 14, **dadurch gekennzeichnet, dass** das zweite Kostenkriterium die Minimierung der Summe der Zuverlässigkeitswerte (Sⱼ) aller eine Route bildenden Kanten (Mⱼ) ist.

16. Verfahren nach einem der vorhergehenden Ansprüche 14 oder 15, **dadurch gekennzeichnet, dass** mit zunehmendem Grad an Zuverlässigkeit (Z_{ges}) das erste Kostenkriterium niedriger und das zweite Kostenkriterium höher gewichtet wird.

17. Routenplanungssystem zur dynamischen Routenplanung mit einer Recheneinheit (1), die mit einer Eingabeeinheit (2), einer Anzeigeeinheit (3) und einem ersten Speicher (5), der ein in einzelne Kanten (Mⱼ) und Knoten (Lᵢ) unterteiltes Straßennetz enthält, verbunden ist, wobei die Recheneinheit (1) zur Berechnung einer Route (R) innerhalb des Straßennetzes zwischen einem Startpunkt (A) und einem Zielpunkt (E), in Abhängigkeit von, den Kanten (Mⱼ) zugeordneten, Kanteneigenschaften ausgelegt ist und wobei in dem ersten (5) oder einem zweiten (4) Speicher zu mindestens einer der Kanten (Mⱼ) des Straßennetzes eine voraussichtliche, von einem vorgegebenen Zeitpunkt abhängige Fahrzeit (Fⱼ) abgelegt ist, **dadurch gekennzeichnet, dass** die voraussichtliche Fahrzeit (Fⱼ) für die mindestens eine Kante (Mⱼ) mit einem Zuverlässigkeitswert versehen ist und dass von einem Benutzer mittels der Eingabeeinheit (2) ein gewünschter Grad an Zuverlässigkeit (Z_{ges}) der Fahrzeit (F_{ges}) der gesamten Route (R) vorgebbar oder auswählbar ist.

18. Routenplanungssystem nach Anspruch 17, **dadurch gekennzeichnet, dass** in dem ersten (5) oder dem zweiten (4) Speicher ein historisches Zeitprofil der mittleren Geschwindigkeit der mindestens einen Kante (Mⱼ) abgelegt ist.

19. Routenplanungssystem nach einem der vorhergehenden Ansprüche 17 oder 18, **dadurch gekennzeichnet, dass** in dem ersten (5) oder dem zweiten (4) Speicher ein historisches Zeitprofil der tatsächlichen Fahrzeit (F_{jT}) der mindestens einen Kante (Mⱼ) abgelegt ist.

20. Routenplanungssystem nach einem der vorhergehenden Ansprüche 17 bis 19, **dadurch gekennzeichnet, dass** ein Modul zur Bestimmung der aktuellen Zeit (8) mit der Recheneinheit (1) verbunden ist.

21. Routenplanungssystem nach einem der vorhergehenden Ansprüche 17 bis 19, **dadurch gekennzeichnet, dass** ein Mitteln zur Positionsbestimmung (6) mit der Recheneinheit (1) verbunden ist.

22. Routenplanungssystem nach einem der vorhergehenden Ansprüche 17 bis 20, **dadurch gekennzeichnet, dass** in dem ersten (5) oder dem zweiten (4) Speicher ein historisches Zeitprofil der Standardabweichung (Sⱼ) der tatsächlichen Fahrzeit (F_{jT}) der mindestens einen Kante (Mⱼ) abgelegt ist.

23. Routenplanungssystem nach einem der vorhergehenden Ansprüche 17 bis 21, **dadurch gekennzeichnet, dass** ein Modul zum Empfang von Verkehrsinformationen (9) mit der Recheneinheit (1) verbunden ist und dass die Verkehrsinformationen erst bei Überschreitung eines vorgegebenen Schweregrades der Verkehrsbehinderung in der Routenplanung berücksichtigt werden.

## Claims

1. A method for dynamic route planning in a route planning system, in which
- a route (R) between a starting point (A) and a destination point (E) is calculated within a road network which is divided into individual edges (Mⱼ) and nodes (Lᵢ), wherein the route (R) is determined as a function of edge properties which are assigned to the edges (Mⱼ),
- at least one edge (Mⱼ) of the road network is assigned an anticipated travel time (Fⱼ) as an edge property, wherein the anticipated travel time (Fⱼ) is dependent on a predefined time,
**characterized in that** the anticipated travel time (Fⱼ) for the at least one edge (Mⱼ) is provided with a reliability value.

2. The method as claimed in claim 1, **characterized in that** the reliability value for the at least one edge (Mⱼ) is acquired from an historical time profile of the standard deviation (Sⱼ) of the actual travel time (F_{jT}) or the average velocity of this edge (Mⱼ).

3. The method as claimed in one of the preceding claims, **characterized in that** the at least one edge (Mⱼ) is an edge which is affected by cyclical traffic congestion.

4. The method as claimed in one of the preceding claims, **characterized in that** the predefined time is the time of day and/or the day of the week.

5. The method as claimed in one of the preceding claims, **characterized in that** the predefined time is determined as the time (T_{an,i}) at which a user of the route planning system will be expected to reach the at least one edge (Mⱼ).

6. The method as claimed in claim 5, **characterized in that** the predefined time is determined on the basis of the current time and the current location of the user of the route planning system.

7. The method as claimed in one of the preceding claims, **characterized in that** the anticipated travel time (Fⱼ) for the at least one edge is acquired from an historical time profile of the average velocity of this edge.

8. The method as claimed in one of the preceding claims, **characterized in that** the anticipated travel time (Fⱼ) for the at least one edge is acquired from an historical time profile of the actual travel time (F_{jT}) of this edge.

9. The method as claimed in one of the preceding claims, **characterized in that** the anticipated travel time (Fⱼ) for the at least one edge (Mⱼ) is converted into a variable which represents the route planning costs (Kⱼ) for this edge (Mⱼ).

10. The method as claimed in one of the preceding claims, **characterized in that** a desired degree of reliability (Z_{ges}), predefined by the user, of the travel time (F_{ges}) of the entire route (R) is taken into account in the route planning.

11. The method as claimed in claim 10, **characterized in that** a first cost criterion which is to be optimized by the route planning is adapted to the desired degree of reliability (Z_{ges}).

12. The method as claimed in claim 11, **characterized in that** the first cost criterion is the minimization of the sum of the anticipated travel times (F_{jR}) of all the edges (M_{jR}) which form a route (R).

13. The method as claimed in claim 12, **characterized in that** the route planning costs (Kⱼ) for the at least one edge (Mⱼ) arise from the increase in the anticipated travel time (Fⱼ) by an uncertainty quantity which drops as the reliability value rises.

14. The method as claimed in claim 11, **characterized in that** a second cost criterion is to be optimized by the route planning, and **in that** the first and second cost criteria are weighted differently depending on the desired degree of reliability (Z_{ges}) and are combined in a superordinate cost value.

15. The method as claimed in claim 14, **characterized in that** the second cost criterion is the minimization of the sum of the reliability values (Sⱼ) of all the edges (Mⱼ) which form a route.

16. The method as claimed in one of preceding claims 14 or 15, **characterized in that** as the degree of reliability (Z_{ges}) increases the first cost criterion is given a lower weighting and the second cost criterion is given a higher weighting.

17. A route planning system for dynamic route planning with a computing unit (1) which is connected to an input unit (2), a display unit (3) and a first memory (5) which contains a road network which is divided into individual edges (Mⱼ) and nodes (Lᵢ), wherein the computing unit (1) is configured to calculate a route (R) within the road network between a starting point (A) and a destination point (E) as a function of edge properties which are assigned to the edges (Mⱼ), and wherein an anticipated travel time (Fⱼ) which is dependent on a predefined time is stored, for at least one of the edges (Mⱼ) of the road network, in the first memory (5) or in a second memory (4), **characterized in that** the anticipated travel time (Fⱼ) for the at least one edge (Mⱼ) is provided with a reliability value, and **in that** a desired degree of reliability (Z_{ges}) of the travel time (F_{ges}) of the entire route (R) can be predefined or selected by a user by means of the input unit (2).

18. The route planning system as claimed in claim 17, **characterized in that** an historical time profile of the average velocity of the at least one edge (Mⱼ) is stored in the first memory (5) or the second memory (4).

19. The route planning system as claimed in one of preceding claims 17 or 18, **characterized in that** an historical time profile of the actual travel time (F_{jT}) of the at least one edge (Mⱼ) is stored in the first memory (5) or the second memory (4).

20. The route planning system as claimed in one of preceding claims 17 to 19, **characterized in that** a module for determining the current time (8) is connected to the computing unit (1).

21. The route planning system as claimed in one of preceding claims 17 to 19, **characterized in that** a position determining means (6) is connected to the computing unit (1).

22. The route planning system as claimed in one of preceding claims 17 to 20, **characterized in that** an historical time profile of the standard deviation (Sⱼ) of the actual travel time (F_{jT}) of the at least one edge (Mⱼ) is stored in the first memory (5) or the second memory (4).

23. The route planning system as claimed in one of preceding claims 17 to 21, **characterized in that** a module for receiving traffic information (9) is connected to the computing unit (1), and **in that** the traffic information is not taken into account in the route planning until a predefined degree of severity of the traffic congestion is exceeded.

## Revendications

1. Procédé permettant la planification dynamique d'itinéraires dans un système de planification d'itinéraires, dans lequel procédé
- un itinéraire (R) est calculé, entre un point de départ (A) et un point de destination (E), à l'intérieur d'un réseau de routes divisé en différentes arêtes ou sections (Mⱼ) et sommets (Lᵢ), l'itinéraire (R) étant déterminé en fonction de propriétés des arêtes ou sections affectées aux arêtes ou sections (Mⱼ),
- un temps de parcours probable (Fⱼ) est affecté en tant que propriété de l'arête ou section à au moins une arête ou section (Mⱼ), le temps de parcours probable (Fⱼ) dépendant d'un moment donné,
**caractérisé par le fait que** le temps de parcours probable (Fⱼ) est doté d'un facteur de fiabilité pour la au moins une arête ou section (Mⱼ).

2. Procédé selon la revendication 1, **caractérisé par le fait que** le facteur de fiabilité pour la au moins une arête ou section (Mⱼ) est obtenu à partir d'un profil historique dans le temps de la variation standard (Sⱼ) du temps de parcours effectif (F_{jT}) ou de la vitesse moyenne sur cette arête ou section (Mⱼ).

3. Procédé selon l'une des revendications précédentes, **caractérisé par le fait que** la au moins une arête ou section (Mⱼ) est une arête ou section touchée par des entraves cycliques à la circulation.

4. Procédé selon l'une des revendications précédentes, **caractérisé par le fait que** le moment donné est un moment de la journée et/ou un jour de la semaine.

5. Procédé selon l'une des revendications précédentes, **caractérisé par le fait que** le moment donné est déterminé comme étant le moment (T_{an,i}) auquel un utilisateur du système de planification d'itinéraires parvient probablement à la au moins une arête ou section (Mⱼ).

6. Procédé selon la revendication 5, **caractérisé par le fait que** le moment donné est déterminé en partant du temps réel actuel et du lieu de séjour actuel de l'utilisateur du système de planification d'itinéraires.

7. Procédé selon l'une des revendications précédentes, **caractérisé par le fait que** le temps de parcours probable (Fⱼ) pour la au moins une arête ou section est obtenu à partir d'un profil historique dans le temps de la vitesse moyenne sur cette arête ou section.

8. Procédé selon l'une des revendications précédentes, **caractérisé par le fait que** le temps de parcours probable (Fⱼ) pour la au moins une arête ou section est obtenu à partir d'un profil historique dans le temps de la durée effective de parcours (F_{jT}) sur cette arête ou section.

9. Procédé selon l'une des revendications précédentes, **caractérisé par le fait que** le temps de parcours probable (Fⱼ) pour la au moins une arête ou section (Mⱼ) est converti en une grandeur représentant le coût (Kⱼ) de la planification d'itinéraires pour cette arête ou section (Mⱼ).

10. Procédé selon l'une des revendications précédentes, **caractérisé par le fait qu'**il est tenu compte, pour la planification d'itinéraires, d'un degré de fiabilité (Z_{ges}), souhaité et prescrit par l'utilisateur, du temps de parcours (F_{ges}) sur l'ensemble de l'itinéraire (R).

11. Procédé selon la revendication 10, **caractérisé par le fait qu'**un premier critère de coûts à optimiser par la planification d'itinéraires est adapté au degré de fiabilité (Z_{ges}) souhaité.

12. Procédé selon la revendication 11, **caractérisé par le fait que** le premier critère de coûts est la minimisation de la somme des temps de parcours probables (F_{jR}) sur toutes les arêtes ou sections (M_{jR}) formant un itinéraire (R).

13. Procédé selon la revendication 12, **caractérisé par le fait que** les coûts (Kⱼ) de la planification d'itinéraires pour la au moins une arête ou section (Mⱼ) découlent de l'augmentation du temps de parcours probable (Fⱼ) d'une valeur d'incertitude qui diminue au fur et à mesure que le facteur de fiabilité augmente.

14. Procédé selon la revendication 11, **caractérisé par le fait qu**'il faut que la planification d'itinéraires optimise un deuxième critère de coûts et que le premier et le deuxième critère de coûts sont pondérés différemment en fonction du degré souhaité de fiabilité (Z_{ges}), puis sont assemblés pour former un facteur de coûts d'ordre supérieur.

15. Procédé selon la revendication 14, **caractérisé par le fait que** le deuxième critère de coûts est la minimisation de la somme des facteurs de fiabilité (Sⱼ) de toutes les arêtes ou sections (Mⱼ) formant un itinéraire.

16. Procédé selon l'une des revendications précédentes 14 ou 15, **caractérisé par le fait que**, en fonction de l'augmentation du degré de fiabilité (Z_{ges}), le premier critère de coûts est pondéré plus faiblement et le deuxième critère de coûts est pondéré plus fortement.

17. Système de planification d'itinéraires destiné à une planification dynamique d'itinéraires, comportant une unité de calcul (1), laquelle est reliée à une unité de saisie (2), une unité d'affichage (3) et une première mémoire (5), laquelle stocke un réseau de routes divisé en différentes arêtes ou sections (Mⱼ) et sommets (Lᵢ), où l'unité de calcul (1) est configurée pour le calcul d'un itinéraire (R) entre un point de départ (A) et un point de destination (E) à l'intérieur d'un réseau de routes, en fonction de propriétés des arêtes ou sections affectées aux arêtes ou sections (Mⱼ) et où un temps de parcours probable (Fⱼ) dépendant d'un moment donné est stocké dans la première (5) ou dans une deuxième mémoire (4) pour au moins l'une des arêtes ou sections (Mⱼ) du réseau de routes, **caractérisé par le fait que** le temps de parcours probable (Fⱼ) pour la au moins une arête ou section (Mⱼ) est doté d'un facteur de fiabilité et qu'un utilisateur peut, à l'aide de l'unité de saisie (2), prescrire ou sélectionner un degré souhaité de fiabilité (Z_{ges}) du temps de parcours (F_{ges}) sur l'ensemble de l'itinéraire (R).

18. Système de planification d'itinéraires selon la revendication 17, **caractérisé par le fait qu'**un profil historique dans le temps de la vitesse moyenne sur la au moins une arête ou section (Mⱼ) est stocké dans la première (5) ou dans la deuxième mémoire (4).

19. Système de planification d'itinéraires selon l'une des revendications précédentes 17 ou 18, **caractérisé par le fait qu'**un profil historique dans le temps de la durée effective de parcours (F_{jT}) de la au moins une arête ou section (Mⱼ) est stocké dans la première (5) ou dans la deuxième mémoire (4).

20. Système de planification d'itinéraires selon l'une des revendications précédentes 17 à 19, **caractérisé par le fait qu'**un module (8) destiné à la détermination du temps réel actuel est relié à l'unité de calcul (1).

21. Système de planification d'itinéraires selon l'une des revendications précédentes 17 à 19, **caractérisé par le fait qu'**un moyen (6) destiné à la détermination de la position est relié à l'unité de calcul (1).

22. Système de planification d'itinéraires selon l'une des revendications précédentes 17 à 20, **caractérisé par le fait qu'**un profil historique dans le temps de la variation standard (Sⱼ) de la durée effective de parcours (F_{jT}) de la au moins une arête ou section (Mⱼ) est stocké dans la première (5) ou dans la deuxième mémoire (4).

23. Système de planification d'itinéraires selon l'une des revendications précédentes 17 à 21, **caractérisé par le fait qu'**un module (9) permettant de recevoir des informations relatives au trafic routier est relié à l'unité de calcul (1) et que les informations relatives au trafic routier ne sont prises en compte dans la planification d'itinéraires que lorsque la gravité des entraves à la circulation dépasse une valeur donnée.
